Europäisches Patentamt

European Patent Office

Office européen des brevets

(19)

(11) Veröffentlichungsnummer: **0 223 901**
**B1**

(12) **EUROPÄISCHE PATENTSCHRIFT**

(45) Veröffentlichungstag der Patentschrift:
02.08.89

(21) Anmeldenummer: 86105276.9

(22) Anmeldetag: 16.04.86

(51) Int. Cl.⁴: **G01F 23/26**
// B22D37/00

(54) Flacher induktiver Füllstandsfühler für flüssige Metalle.

(30) Priorität: 27.11.85 DE 3541967

(43) Veröffentlichungstag der Anmeldung:
03.06.87 Patentblatt 87/23

(45) Bekanntmachung des Hinweises auf die Patenterteilung:
02.08.89 Patentblatt 89/31

(84) Benannte Vertragsstaaten:
CH DE FR GB IT LI

(56) Entgegenhaltungen:
EP-A- 0 010 539
EP-A- 0 087 382
EP-A- 0 115 258
CH-A- 609 595
DE-B- 1 243 891
DE-C- 3 245 832
GB-A- 1 471 480
GB-A- 1 585 496

(73) Patentinhaber: INTERATOM Gesellschaft mit beschränkter Haftung, Friedrich-Ebert-Strasse, D-5060 Bergisch-Gladbach 1(DE)

(72) Erfinder: Barzantny, Joachim, im Wiesengrund 42, D-5067 Kürten 1(DE)
Erfinder: Selbach, Hans-Günther, Am Brunnenberg 4, D-5253 Lindlar(DE)
Erfinder: Thissen, Klaus, Aachener Strasse 392-394, D-5000 Köln 41(DE)
Erfinder: Lauhoff, Theodor, Enrico-Fermi-Str. 2, D-5060 Bergisch Gladbach 1(DE)

(74) Vertreter: Mehl, Ernst, Dipl.-Ing. et al, Postfach 22 13 17, D-8000 München 22(DE)

ACTORUM AG

## Beschreibung

Die vorliegende Erfindung betrifft einen induktiven Füllstandsfühler nach dem Oberbegriff des Anspruchs 1.

Solche induktiven Flüssigmetallfühler finden in verschiedenen Ausführungsformen beispielsweise in der Gießereitechnik Anwendung. Aus der DE-C1-32 45 832 ist ein Aufsatz für Gußformen bekannt, welcher übereinander angeordnete Induktionsspulen zur Messung des Endfüllstandes in einer Gußform aufweist.

Häufig ist es in der Gießereitechnik nötig, die Annäherung des Flüssigmetallspiegels an einen Behälterdeckel oder ein sonstiges flaches Bauteil, welches beispielsweise Bestandteil einer Gießmaschine sein kann, zu messen. Insbesondere auch die Umrüstung von bestehenden Gießmaschinen mit beengten Platzverhältnissen ist mit den bisherigen Bauformen von Füllstandsmessern nicht immer durchführbar.

Aufgabe der vorliegenden Erfindung ist daher die Schaffung eines flachen Füllstandsfühlers, welcher zur Nachrüstung auch bei beengten Platzverhältnissen geeignet ist und gegebenenfalls in flache Bauteile eingesetzt oder integriert werden kann.

Zur Lösung dieser Aufgabe wird ein induktiver Füllstandsfühler mit den Merkmalen des Anspruchs 1 vorgeschlagen. Bevorzugte Ausgestaltungen sind in den abhängigen Ansprüchen beschrieben. Die flache Bauform des erfindungsgemäßen Füllstandsfühlers ermöglicht den Einsatz an Stellen, an denen bisher induktive Messungen nicht möglich waren. Insbesondere besteht die Möglichkeit, diesen Füllstandsmesser in oder unter flachen Bauteilen anzuordnen, wobei je nach der Art des dort verwendeten Flüssigmetalls geeignete Ummantelungen gewählt werden können. Wichtig ist natürlich, daß die Spulen auf ihrer dem Flüssigmetall zugewandten Seite nicht durch Metallschichten abgeschirmt werden, da sonst das Meßprinzip nicht funktioniert.

Ein Ausführungsbeispiel der Erfindung ist in der Zeichnung dargestellt, und zwar zeigen

Figur 1 eine Ansicht von unten unter eine Mischplatte einer Aluminium-Gießmaschine und

Figur 2 einen Schnitt durch diese Platte entlang der Linie II-II.

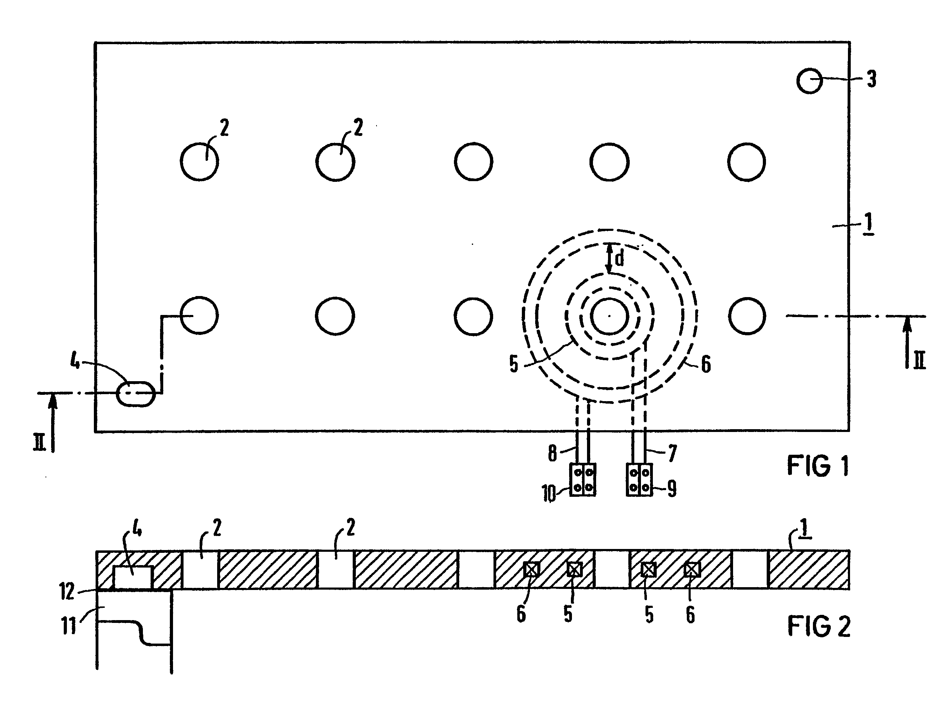

Figur 1 zeigt eine Zwischenplatte 1 einer Gießmaschine, welche einen Aluminiumvorratsbehälter, einen sogenannten Tundish abdeckt. Auf diese Zwischenplatte ist eine Gußform aufsetzbar, welche durch die Öffnungen 2 mit Flüssigmetall gefüllt wird. Nach dem Erstarren des Flüssigmetalls in der Gußform und vor dem Abheben der Gußform von der Zwischenplatte 1 muß der Flüssigmetallspiegel im Vorratsbehälter abgesenkt und auf einer bestimmten Höhe kurz unterhalb der Abdeckplatte 1 gehalten werden. Zur genauen Einhaltung und Messung dieser Höhe dient der erfindungsgemäße Füllstandsfühler, welcher in die Zwischenplatte 1 integriert ist. Dazu besteht die Zwischenplatte aus elektrisch nicht leitendem, aluminiumbeständigen keramischen Material, in welches zwei konzentrische Spulen 5,6 mit ihren Zuleitungen 7, 8 integriert sind. Über Steckverbindungen 9, 10 oder dergleichen können die Spulen an eine Konstantwechselstromquelle bzw. eine Meßelektronik angeschlossen werden. Vorzugsweise wird die innere Spule 5 als Sendespule benutzt, da diese aufgrund ihres geringeren Umfanges bei gleicher Windungszahl einen geringeren ohmschen Widerstand aufweist, wodurch eine höhere Sendeleistung erzeugt werden kann. Der Abstand d der Spulen 5, 6 liegt etwa in der Größenordnung des Abstandes, in welchem das Flüssigaluminium unterhalb der Zwischenplatte 1 gehalten werden soll. Wegen der relativ großen Streuung des Magnetfeldes der Spulen können jedoch auch größere und kleinere Abstände gemessen werden. Die gesamte Zwischenplatte 1 liegt, getrennt durch eine Dichtung 12,auf dem Rand 11 des Vorratsbehälters auf. Durch geeignete Mittel 3, 4,beispielsweise Sacklöcher, in welche Stifte eingreifen, wird die Zwischenplatte fixiert.

Bei der Verwendung einer metallischen Zwischenplatte können die Spulen 5, 6 nicht im Inneren der Platte integriert werden. In diesem Falle ist es jedoch möglich, diese an der Unterseite der Platte in einer entsprechenden Aussparung anzuordnen und durch keramische Masse zu schützen und zu befestigen. Im vorliegenden Ausführungsbeispiel sind die Spulen um eine von mehreren Öffnungen 2 in der Zwischenplatte angeordnet. Dies ist bei den gegebenen Platzverhältnissen besonders vorteilhaft, da bei dieser Anordnung im Umgebungsbereich der Spulen 5, 6 noch genügend Materialstärke für eine Stabilität der Zwischenplatte 1 verbleibt. Grundsätzlich sind jedoch auch andere Anordnungen zwischen den Öffnungen 2 oder unter Umschließung zweier oder mehrerer Öffnungen 2 möglich.

Der vorliegende induktive Füllstandsfühler eignet sich besonders zur Messung und Einregelung des Füllstandes in einem Vorratsbehälter in Verbindung mit einer induktiven Flüssigmetall-Förderpumpe, welche den Vorratsbehälter speist.

## Patentansprüche

1. Induktiver Füllstandsfühler, bestehend aus einer mit einem konstanten Wechselstrom erregbaren Sendespule (5) und einer Empfangsspule (6), welche gegenseitig induktiv gekoppelt sind, wobei die Annäherung einer elektrisch leitenden Flüssigkeit die Kopplung kontinuierlich vermindert, **dadurch gekennzeichnet**, daß die Sendespule (5) und die Empfangsspule (6) etwa konzentrisch in einer gemeinsamen Ebene angeordnet sind.

2. Induktiver Füllstandsfühler nach Anspruch 1, **dadurch gekennzeichnet**, daß die Spulen (5, 6) möglichst flach ausgeführt sind, vorzugsweise durch spiralig gewickelte Leiter.

3. Induktiver Füllstandsfühler nach Anspruch 1 oder 2, **dadurch gekennzeichnet**, daß der Abstand (d) zwischen den Spulen (5, 6) etwa in der Größenordnung des am genauesten zu messenden Abstandes von elektrisch leitender Flüssigkeit zur Spulenebene liegt.

4. Induktiver Füllstandsmesser nach Anspruch 1, 2 oder 3, **dadurch gekennzeichnet**, daß die innere Spule (5) als Sendespule und die äußere Spule (6) als Empfangsspule ausgebildet ist.

5. Induktiver Füllstandsmesser nach Anspruch 1, 2, 3 oder 4, **dadurch gekennzeichnet**, daß die Spulen aus hochtemperaturfesten Leitern bestehen.

6. Induktiver Füllstandsmesser nach einem der vorhergehenden Ansprüche, **dadurch gekennzeichnet**, daß der Füllstandsfühler in eine keramische Deckelplatte, Verteilerplatte oder dergleichen eines Schmelzenbehälters, einer Gießmaschine oder dergleichen integriert ist.

7. Induktiver Füllstandsfühler nach einem der Ansprüche 1 bis 5, **dadurch gekennzeichnet**, daß der Füllstandsfühler keramisch vergossen und in geeignete flache Aussparungen von Bauteilen an Schmelz- bzw. Gießvorrichtungen einlegbar ist.

**Claims**

1. Inductive level sensor, consisting of a transmitting coil (5), which can be excited with a constant alternating current, and a receiving coil (6), which coils are mutually coupled inductively, the approach of an electrically conductive fluid continuously reducing the coupling, characterised in that the transmitting coil (5) and the receiving coil (6) are arranged substantially concentrically in a common plane.

2. Inductive level sensor according to claim 1, characterised in that the coils (5, 6) are constructed so that they are as flat as possible, preferably as spirally wound conductors.

3. Inductive level sensor according to claim 1 or 2, characterised in that the distance (d) between the coils (5, 6) lies substantially in the order of magnitude of the distance, to be measured as accurately as possible, of electrically conductive fluid from coil plane.

4. Inductive level meter according to claim 1, 2 or 3, characterised in that the inner coil (5) is formed as a transmitting coil and the outer coil (6) is formed as a receiving coil.

5. Inductive level meter according to claim 1, 2, 3 or 4, characterised in that the coils consist of high-temperature resistant conductors.

6. Inductive level meter according to one of the preceding claims, characterised in that the level sensor is integrated in a ceramic cover plate, distributor plate or the like of a fusion container, a casting machine or the like.

7. Inductive level sensor according to one of the preceding claims 1 to 5, characterised in that the level sensor is ceramically encapsulated and can be inserted into suitable flat recesses of components on fusion or casting devices.

**Revendications**

1. Capteur inductif de niveau, constitué par une bobine d'émission (5) pouvant être excitée par un courant alternatif constant, et par une bobine de réception (6), ces deux bobines étant couplées inductivement entre elles et le couplage étant réduit continûment au fur et à mesure qu'un liquide électriquement conducteur se rapproche du capteur, caractérisé par le fait que la bobine d'émission (5) et la bobine de réception (6) sont disposées approximativement concentriquement dans un même plan.

2. Capteur inductif de niveau suivant la revendication 1, caractérisé par le fait que les bobines (5, 6) possèdent une forme aussi plate que possible et sont constituées de préférence par un conducteur enroulé en spirale.

3. Capteur inductif de niveau suivant la revendication 1 ou 2, caractérisé par le fait que la distance (d) entre les bobines (5, 6) est à peu près de l'ordre de grandeur de la distance, qui doit être mesurée d'une manière aussi précise que possible, entre le liquide électriquement conducteur et le plan de la bobine.

4. Capteur inductif de niveau suivant la revendication 1, 2 ou 3, caractérisé par le fait que la bobine intérieure (5) est réalisée sous la forme d'une bobine d'émission et que la bobine extérieure (6) est réalisée sous la forme d'une bobine de réception.

5. Capteur inductif de niveau suivant la revendication 1, 2, 3 ou 4, caractérisé par le fait que les bobines sont constituées par des conducteurs résistant aux températures élevées.

6. Capteur inductif de niveau suivant l'une des revendications précédentes, caractérisé par le fait que ce captuer intégré dans une plaque céramique de couverture, une plaque de répartition ou analogue d'un récipient logeant une masse fondue, d'une machine de coulée ou analogue.

7. Capteur inductif de niveau suivant l'une des revendications 1 à 5, caractérisé par le fait que ce capteur est enrobé d'une céramique et peut être inséré dans des évidements plats appropriés de composants situés dans des dispositifs de fusion ou de coulée.

FIG 1

FIG 2